# EUROPÄISCHE PATENTSCHRIFT

(11) **EP 0 866 216 B1**
(45) Veröffentlichungstag und Bekanntmachung des Hinweises auf die Patenterteilung: **07.05.2003**
(21) Anmeldenummer: 98104083.5
(22) Anmeldetag: 07.03.1998
(51) Int. Cl.: F01L 1/047, F01L 13/00, F16H 53/02

(54) **Nockenwelle**
Camshaft
Arbre à cames

(30) Priorität: 21.03.1997 AT 49397; 28.04.1997 AT 72797
(43) Veröffentlichungstag der Anmeldung: 23.09.1998
(73) Patentinhaber: Battlogg, Stefan, 6771 St. Anton/Montafon (AT)
(72) Erfinder: Battlogg, Stefan, 6771 St. Anton/Montafon (AT)
(74) Vertreter: Torggler, Paul Norbert, Dr.

(56) Entgegenhaltungen:
- DE-A- 3 212 663
- DE-A- 3 705 128
- US-A- 1 512 034
- PATENT ABSTRACTS OF JAPAN vol. 17, no. 212 (M-1402), 26.April 1993 & JP 04 351259 A (KIRIYUU KIKAI), 7.Dezember 1992,

## Beschreibung

Die Erfindung betrifft eine Nockenwelle mit Antriebs-, Lager- und Nockenelementen, gemaß Anspruch 1, 1. Teil (vergl. mit US-A-1512034).

Bei Nockenwellen für Verbrennungsmotoren sind für die verdrehsichere Befestigung der Nockenwellenelemente auf einer Trägerwelle sind bereits eine Vielzahl von verschiedenen Möglichkeiten bekannt geworden. Spezielle Verfahren umfassen das Aufweiten einer Hohlwelle im Bereich der Nockenwellenelemente, die eine unrunde Durchstecköffnung aufweisen (EP-A 190 841, EP-A 282 166, EP-A 303 845, EP-A 389 070), das Sintem der Nockenelemente aus Metallpulver auf der Welle (EP-A 364 028), das Einsetzen gewellter Spannhülsen zwischen eine längsgerillte Trägerwelle und das Nockenelement mit ebenfalls gerillter Durchstecköffnung (EP-A 745 757), das Festkleben der Nockenelemente auf einer längsgerillten Trägerwelle (EP-A 119 112), die Ausbildung umfangsgerillter Bereiche auf der Trägerwelle, die von den Nockenwellenelementen verformt werden (EP-A 486 876, EP-A 521 354), das Festschrauben der Nockenwellenelemente auf der Trägerwelle (WO-A 93/10336), das Festklemmen oder Verkeilen der Nockenwellenelemente auf der Trägerwelle (EP-A 170 187, EP-A 178 536, EP-A 178 537) usw.

Mittels einer sogenannten variablen Ventilsteuerung gelingt es, für den großen Drehzahlund Lastbereich eines Verbrennungsmotors die jeweiligen Gegebenheiten zu optimieren. Sowohl Öffnungs- und Schließzeitpunkt der einzelnen Ventile als auch ihr Hub können durch die variable Ventilsteuerung verändert werden. Neben der Verdrehung der gesamten Nockenwelle oder einzelner Nockenelemente ist es auch bekannt, die gesamte Nockenwelle (EP-A 108 238, EP-A 116 306, EP-A 590 577), einzelne Nockenelemente (US-A 5,359,970, US-A 4,730,588, US-A 5,158,049) oder Zwischenglieder (FR-A 26 94 786) in Längsrichtung der Nockenwelle zu verschieben. Nach der US-A 5,359,970 weisen die verschiebbaren Nockenelemente ein Erhebungsprofil, jedoch denselben Grundkreisradius auf wie die axial nicht verschiebbaren Nockenelemente. Jedes verschiebbare Nockenelement ist in Verschieberichtung beaufschlagt, wobei es mit dem größeren Nockenbereich an einem einen Anschlag bildenden Zwischenglied anliegt, und mit Erreichen des Grundkreisbereiches axial verschoben wird, sodaß das vorhandene unverschiebbare Nockenelement funktionell abgelöst wird. Die Verschiebung erfolgt mittels einer auf der Nockenwelle verschiebbaren Hülse, die hydraulisch beaufschlagbar ist, und die Rückstellung über eine die Nockenwelle umgebende Feder, die sich am unverschiebbaren Nockenelement abstützt.

Die Erfindung hat es sich nun zur Aufgabe gestellt, eine andere, insbesondere kostengünstigere Möglichkeit für eine in Umfangsrichtung verdrehgesicherte, und gegebenenfalls auch in Längsrichtung verschiebbare Anordnung von Nockenwellenelementen zu schaffen.

Erfindungsgemäß wird dies gelöst, durch die Merkmale gemäß Anspruch 1.

Der Aufbau einer Nockenwelle ist dadurch denkbar einfach, da mit entsprechenden Durchstecköffnungen versehenen Nockenwellenelemente, nämlich Nockenelemente, die beispielsweise Ein- und Ausströmventile von Brennkraftmaschinen betätigen, Lagerringe, mittels denen die Nockenwelle in Lagerblöcken gelagert ist, zumindest ein Antriebselement. usw., in der gewünschten Reihenfolge auf die Stäbe aufgeschoben werden. Es bedarf höchstens einer axialen Fixierung der Elemente, nicht jedoch einer Fixierung in Umfangsrichtung.

Die Anzahl der Stäbe richtet sich nach verschiedenen Kriterien: zumindest zwei sind für den Formschluß in Umfangsrichtung der Nockenwellenelemente erforderlich, drei oder mehr Stäbe erhöhen die Torsionsfestigkeit der Nockenwelle. Die Zahl der Stäbe kann weiters auch von der Anzahl der Nockenpositionen bestimmt sein, sowie von der Anzahl unterschiedlicher Nockentypen, die benötigt werden.

Weiters ist es möglich, daß die Stäbe dicht aneinanderliegend oder mit Abstand zueinander angeordnet sind. Dicht aneinanderliegende Stäbe, die gegebenenfalls auch miteinander verklebt, verschweißt oder sonstwie verbunden sein können, erhöhen wiederum die Torsionsfestigkeit der Nockenwelle, hingegen erlauben voneinander beabstandete Stäbe die Anordnung einer Ausgleichsmasse, die beispielsweise in Form einer Hülse auf einen einem Nocken gegenüberliegenden Stab aufgeschoben wird.

Dicht aneinanderliegende Stäbe bilden ein Bündel, das in den Nockenwellenelementen eine einzige, aus ineinander übergehenden Öffnungen zusammengesetzte Durchstecköffnung erfordert, deren Rand aus der der Stabanzahl entsprechenden Zahl von Kreisbogen zusammengesetzt ist. Bündel von dicht aneinanderliegenden Stäben können auch mehr als drei Stäbe aufweisen, wenn sie um einen zentralen Stab angeordnet werden. Beispielsweise können sechs Stäbe rund um einen zentralen Stab jeweils einander berührend angeordnet sein, wenn der zentrale Stab denselben Durchmesser aufweist. Ist dessen Durchmesser unterschiedlich, kann das Bündel mehr oder weniger Stäbe umfassen. Nockenwellenelemente mit einer dem Bündel entsprechenden Durchstecköffnung lassen sich mit höchster Maßgenauigkeit in bekannten Sinterverfahren herstellen.

Sind die Stäbe voneinander beabstandet, so weist jedes Nockenwellenelement eine der Stabzahl entsprechende Anzahl von Durchstecköffnungen auf, deren Querschnitt dem Stabquerschnitt entspricht. Im übrigen kann jeder Stab zylindrisch oder hohlzylindrisch, ebenso aber auch drei- oder mehrkantig oder oval ausgebildet sein. Die auf den Stäben aufgefädelten Nockenwellenelemente können einzeln mit Abstand zueinander angeordnet werden, wobei eine axiale Fixierung beispielsweise mittels der erwähnten Hülsen erfolgen kann, die einzeln auf die Stäbe aufgeschoben werden, oder die alle Stäbe gemeinsam umgeben. Nockenwellenelemente können weiters auch zu Funktionsgruppen zusammengefaßt sein, sodaß sich abstandhaltende Zwischenstücke innerhalb der Gruppe erübrigen.

Eine weitere Ausführung sieht vor, daß zumindest zwei Nockenwellenelemente zu einer einstückigen Einheit zusammengefaßt sind, wobei sich die Art der Zusammenstellung auch nach dem gewählten Herstellungsverfahren richtet Werden die Einheiten in einem Sinterverfahren hergestellt, so kann eine Einheit insbesondere ein Nockenelement und ein Lagerelement umfassen. Eine derartige Einheit kann dann mit einem einzelnen Nockenelement oder mit einer zweiten derartigen Einheit verbunden werden, wobei beliebige Verbindungsarten gewählt werden können. Liegen die Stäbe nicht aneinander, so können die Elemente bzw. Einheiten durch eine zentrale Schraube verbunden sein, mit deren Hilfe die Elemente auch auf den Stäben axial festgeklemmt werden können. Denkbar sind Spreiz- oder Klemmelemente, die sich unter Druck aufweiten oder verengen. Eine andere Möglichkeit sieht vor, daß die Durchstecköffnungen geringfügig schräg in den aneinanderzufügenden Stirnflächen verlaufen, sodaß sich die miteinander verschraubten Teile an den Stäben verspannen. Die Lagerelemente, insbesondere zwei aneinanderstoßende Lagerringe, können auch als Träger oder Teil eines Wälzlagers dienen. Die Stäbe können hohl oder voll ausgebildet sein. Hohle Stäbe können an den Enden Innengewinde tragen, in die Schrauben eingesetzt sind, deren Köpfe die äußersten Nockenwellenelemente axial fixieren. Volle Stäbe können als Schraubbolzen ausgebildet sein, wobei sich die Köpfe an einem äußersten Nockenwellenelement abstützen, und ihre Gewinde tragenden Enden in Gewindebohrungen einer das zweite äußerste Nockenwellenelement axial festliegenden Scheibe eingeschraubt sind.

Eine variable Ventilsteuerung läßt sich mit einer erfindungsgemäßen Nockenwelle in einfacher Weise dadurch bewerkstelligen, daß zumindest ein Stab in Längsrichtung der Nockenwelle verschiebbar und zumindest ein Nockenelement mit dem verschiebbaren Stab gekoppelt ist

Durch die Anordnung auf mehreren Stäben ist es möglich, zumindest einen Stab für die Verschiebung verschiebbarer Nockenelemente einzusetzen und ein erforderliches Steilglied ans Ende der Nockenwelle zu verlegen, ohne die gesamte Nockenwelle verschieben zu müssen. Da die Verschiebung nur in Schließstellung des jeweiligen Ventils erfolgen kann, also dann, wenn der Grundkreisbereich des verschiebbaren Nockenelementes wirksam wird, sind nur geringe Stellkräfte erforderlich. Für den Stellantrieb lassen sich daher beliebige geeignete Mittel einsetzen, beispielsweise eine druckmittelbetätigte, eine elektromagnetische Verstelleinheit, angetriebene Elemente mit zwei- oder dreidimensionalen Kurvenbahnen, Gewindespindeln etc.

In einer ersten Ausführung ist vorgesehen, daß alle verschiebbaren Nockenelemente auf einem gemeinsamen, verschiebbaren Stab angeordnet sind, und jedes Nockenelement auf dem verschiebbaren Stab um die Verschiebelänge des Stabes zumindest in der Verschieberichtung federbeaufschlagt verschiebbar angeordnet ist In dieser Ausführung sind alle verschiebbaren Nockenelemente dadurch einzeln verschiebbar, daß sie bei verschobenem Stab durch die sie beaufschlagende Feder nur verschoben werden, wenn der Grundkreisbereich mit dem Ventilstellglied zusammenwirkt, da die Verschiebung im vergrößerten Nockenbereich des verschiebbaren Nockenelementes durch das Ventilstellglied (Ventilstößel, Kipphebel usw.) gesperrt ist. Bevorzugt ist hierfür auf dem verschiebbaren Stab pro verschiebbarem Nockenelement ein ringförmiges Widerlager und eine Stellfeder vorgesehen. Die Rückstellung erfolgt bevorzugt ebenfalls über eine Feder, die sich insbesondere an einem unverschiebbaren Nockenwellenelement (Nockenelement, Lagerelement oder Antriebselement) abstützt. Gegebenenfalls kann auch hierfür ein Widerlager am verschiebbaren Stab vorgesehen sein.

In einer zweiten bevorzugten Ausführung ist vorgesehen, daß jedes verschiebbare Nockenelement fest auf einem eigenen, verschiebbaren Stab angeordnet ist. Die Anzahl der parallelen Stäbe ist dadurch höher, beispielsweise können für einen Vierzylinder-Reihenmotor die Nockenwellenelemente auf vier einzeln verschiebbaren Stäben, für einen Sechszylinder-V-Motor die Nockenwellenelemente für jeweils drei Zylinder auf drei einzeln verschiebbaren Stäben aufgefädelt sein. Die Stäbe sind dabei entsprechend den Eckpunkten eines regelmäßigen Drei-, Vier- oder Mehrecks angeordnet.

Weiters können auch verschiebbare und nicht verschiebbare Stäbe vorgesehen sein. In diesem Fall ist bevorzugt vorgesehen, daß jeder nicht verschiebbare Stab als Trägerstab der Nockenwellenelemente einen größeren Durchmesser als der eine Schub- oder Zugstange bildende verschiebbare Stab aufweist.

Die Einzelverschiebbarkeit der Nockenelemente erlaubt die Änderung vom Ventilöffnungszeitpunkt, Ventilschließzeitpunkt, Ventilöffnungszeit und Ventilhub dann, wenn das verschiebbare Nockenelement zusätzlich zu einem nicht verschiebbaren kleineren Nockenelement auf dasselbe Ventilstellglied einwirken kann, und damit während seiner Verwendung das kleinere Nockenelement ersetzt.

Die Einzelverschiebbarkeit eines Nockenelementes kann aber auch für die Abschaltung eines Zylinders herangezogen werden, wenn das verschiebbare Nockenelement das einzige dem Ventilstellglied des Zylinders zugeordnete Nockenelement ist, oder wenn beide dem Ventilstellglied zugeordnete Nockenelemente verschiebbar sind.

Nachstehend wird nun die Erfindung an Hand der Figuren der beiliegenden Zeichnungen näher beschrieben, ohne darauf beschränkt zu sein.

Es zeigen:
- Fig. 1: eine Schrägansicht einer dreistäbigen Nockenwelle,
- Fig. 2: die einzelnen Bestandteile dieser dreistäbigen Nockenwelle ähnlich Fig. 1,
- Fig. 3: ein Nockenwellenelement eines vierstäbigen Ausführungsbeispiels,
- Fig. 4: einen Längsschnitt durch ein viertes Ausführungsbeispiel,
- Fig. 5: die Draufsicht auf ein Lagerelement einer sechs- bzw. siebenstäbigen Nockenwelle,
- Fig. 6: eine Schrägansicht eines weiteren vierstäbigen Ausführungsbeispieles,
- Fig. 7: die einzelnen Bestandteile der Ausführung nach Fig. 6,
- Fig. 8: die Bestandteile einer sechsstäbigen Nockenwelle mit drei verschiebbaren Nockenelementen,
- Fig. 9: eine Draufsicht auf die Nockenwelle der Fig. 8,
- Fig. 10 und 11: Schrägansichten zweier verschiedener Stellungen der Nockenwelle, und
- Fig. 12 und 13: Teillängsschnitte durch zwei weitere Ausführungen einer vierstäbigen Nockenwelle mit verschiebbaren Nockenelementen.

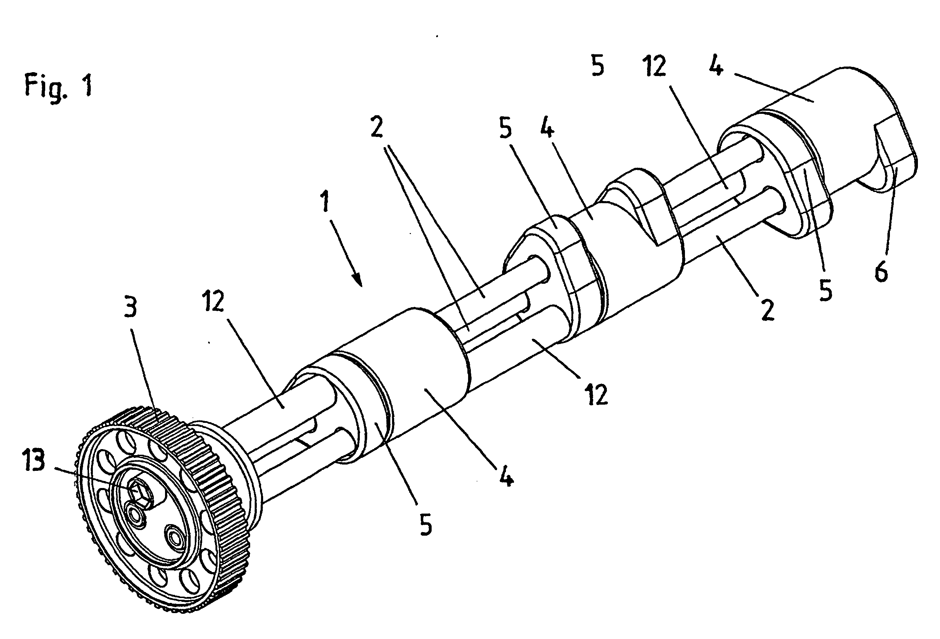

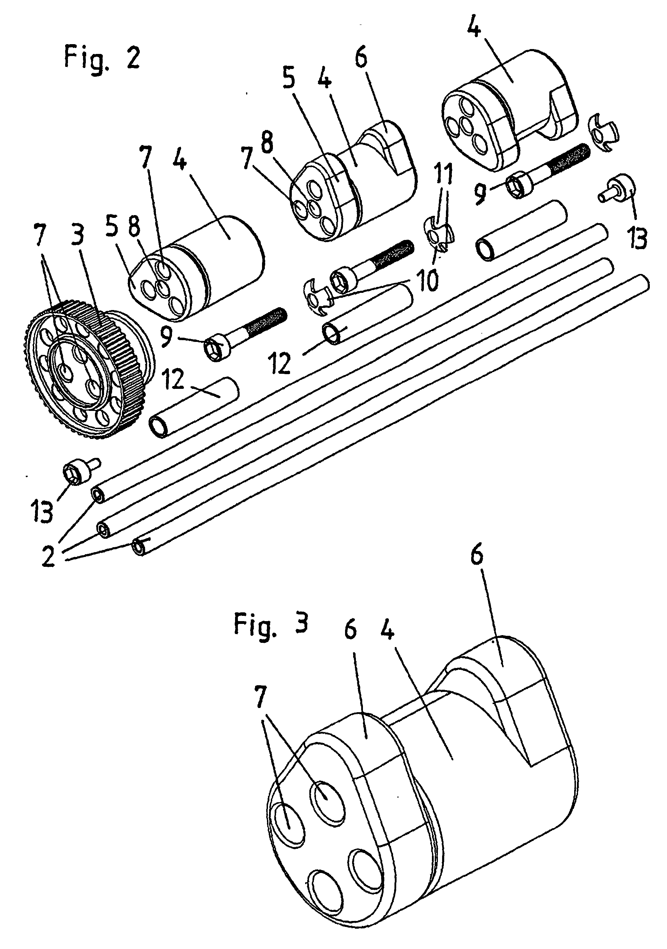

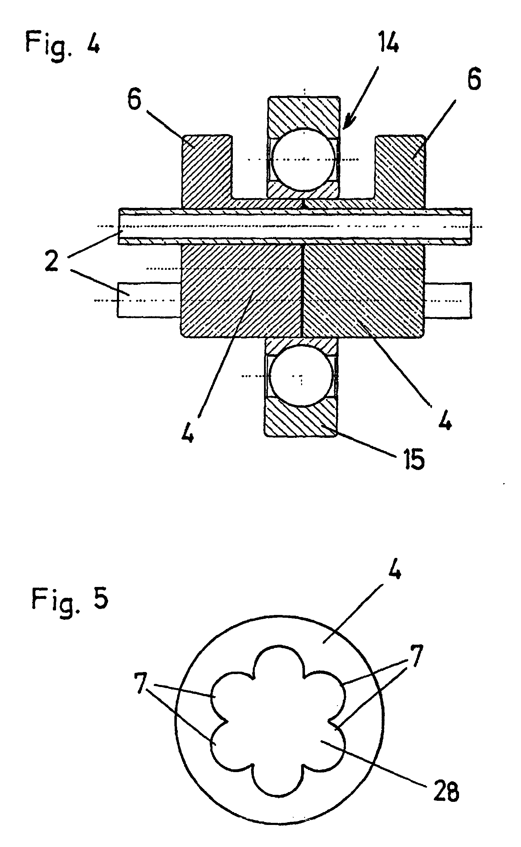

Eine Nockenwelle 1, beispielsweise zur Betätigung von sechs Ventilen eines Verbrennungsmotors, ist in Fig. 1 dargestellt. Die Nockenwelle weist ein Antriebselement 3, beispielsweise in Form eines Stimzahnrades, sowie Nockenelemente 5 und Lagerelemente 4 auf, die in am Motor fixierten Lagerblöcken gelagert sind. Die Nockenwellenelemente 4,5 sind in Funktionsgruppen angeordnet, wobei in der dem Antriebselement 3 benachbarten Gruppe sowie in der äußerst rechten Gruppe je ein Nockenelement 5 und ein Lagerelement 4 aneinandergefügt sind, an dem ein Nocken 6 ausgebildet ist. Die mittlere Gruppe zeigt einen dreiteiligen Aufbau aus zwei Nockenelementen 5 und einem Lagerelement 4. Auch andere Möglichkeiten sind denkbar, wie z.B. ein einstückiger Aufbau gemäß Fig. 3, in der am Lagerelement 4 zwei Nocken 6 ausgebildet sind, oder gemäß Fig. 4, in der zwei Lagerelemente 4 aneinandergefügt sind, die je einen Nocken 6 tragen. Die Nockenwelle 1 ist aus den einzelnen Teilen zusammengebaut, wobei anstelle der herkömmlichen Trägerwelle zumindest zwei zueinander parallele Stäbe 2 vorgesehen sind, auf die die Nockenwellenelemente 3,4,5 aufgefädelt sind. Die Nockenwellenelemente 3,4,5 sind dadurch in Umfangsrichtung der Nockenwelle 1 verdrehfest, ohne daß eine Fixierung in dieser Richtung erforderlich ist. Die geometrische Achse der Nockenwelle liegt in der Symmetrieachse bzw. Schwerlinie zwischen den Stäben 2, sodaß die Nockenwellenelemente 3,4,5 zentriert sind und konzentrische Umfangsflächen aufweisen.

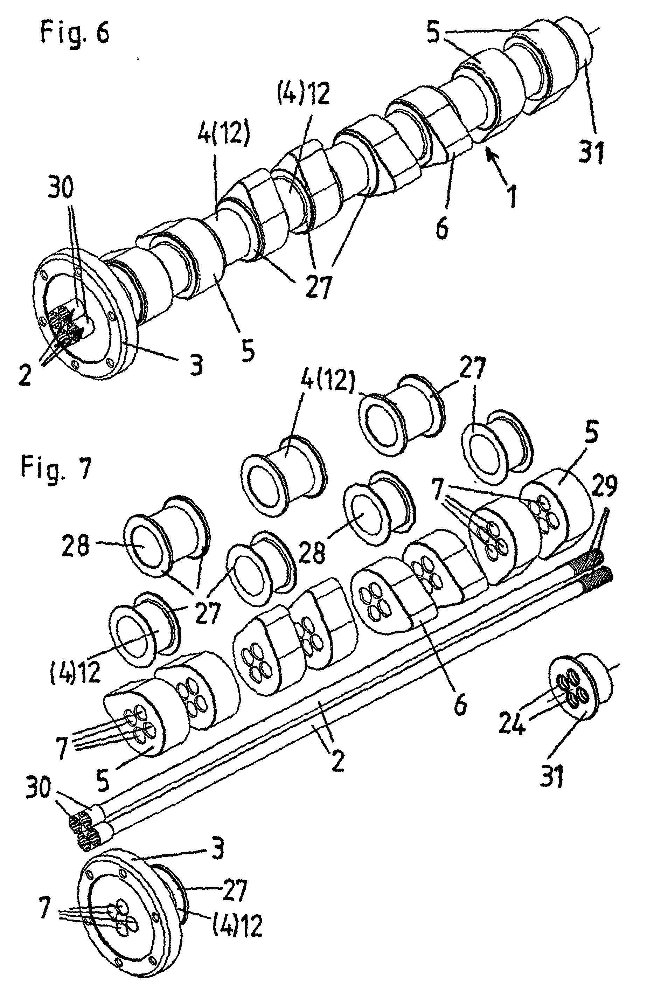

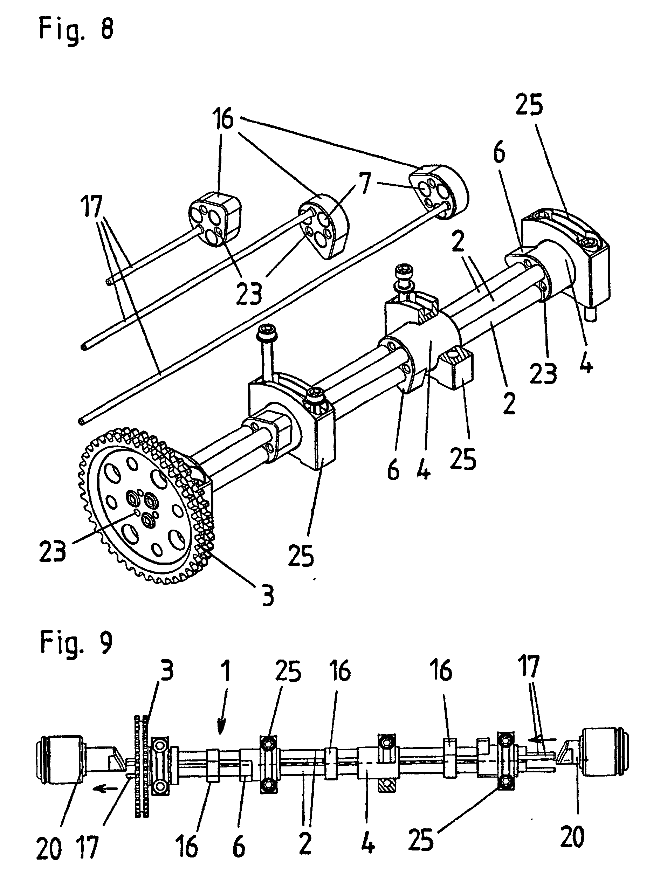

In der Ausführung nach Fig. 1 ist eine dreistäbige Nockenwelle gezeigt, deren Stäbe 2 mit Abstand zueinander im gleichseitigen Dreieck angeordnet sind, wobei die geometrische Achse der Nockenwelle durch den Schwerpunkt des Dreiecks verläuft. Fig. 3 zeigt ein Nockenwellenelemnt für eine vierstäbige Nockenwelle, deren vier Stäbe 2 mit Abstand zueinander in einem Quadrat liegen, Fig. 5 zeigt ein Lagerelement 4 für eine sechsstäbige Nockenwelle, deren Stäbe einander berühren, Fig. 6 eine zweite Ausführung einer vierstäbigen Nockenwelle und Fig. 8 eine zweite Ausführung einer sechsstäbigen Nockenwelle.

Für die axiale Fixierung der Nockenwellenelemente 3,4,5 bieten sich verschiedene Möglichkeiten an. Endseitig kann die Fixierung beispielsweise durch Schrauben 13 erfolgen, die in Innengewinde der bevorzugt hohlen Stäbe 2 eingreifen, wie Fig. 1 zeigt. Zwischen den Gruppen von Nockenwellenelementen können jeweils auf zumindest einem Stab 2 Hülsen 12 (Fig. 2) aufgesteckt sein, die den Abstand festlegen, wobei jede Hülse 12 auch als Massenausgleich dienen kann, wenn sie auf einem dem Nocken gegenüberliegenden Stab 2 angeordnet wird. Fig. 6 und 7 zeigen eine axiale Ausführung, in der die Stäbe 2 als Gewindeschrauben ausgebildet sind, wobei für die Fixierung an einem Ende eine Scheibe 31 mit Gewindebohrungen 24 vorgesehen ist, in die die Gewinde 29 tragenden Enden der Stäbe 2 eingeschraubt sind. Deren Köpfe 30 stützen sich am Antriebselement 3 ab.

Fig. 2 zeigt mögliche Bauteile für dreistäbige Nockenwellen, wobei auch Varianten gegenüber Fig. 1 angedeutet sind. Beispielsweise kann die Verbindung der Nockenwellenelemente 4,5 jeder Gruppe bei einem Abstand zwischen den Stäben 2 dadurch erfolgen, daß eine in der geometrischen Achse der Nockenwelle liegende Mittelbohrung 8 in den Nockenwellenelementen 4,5 ausgebildet ist, durch die sich eine Schraube 9 erstreckt, auf deren herausragendem Ende eine nicht gezeigte Mutter aufgeschraubt wird. Anstelle der Mutter kann auch eines der beiden Nockenwellenelemente 4,5 in der Mittelbohrung 8 ein Gewinde aufweisen, in das die Schraube 9 eingreift. Weiters ist es auch denkbar, daß nur eines der beiden Nockenwellenelemente die Mittelbohrung 8 und das zweite einen abstehenden Gewindezapfen aufweist, auf den wiederum eine Mutter aufschraubbar ist. Die Schraube 9 kann weiters auch zur Axialbefestigung herangezogen werden, wenn beispielsweise zwischen das Nockenelement 5 und/oder das Lagerelement 4 und/oder die Mutter eine gewölbte Beilagscheibe 10 eingelegt wird, deren Umfangsausnehmungen 11 sich beim Flachdrücken der Beilagscheibe 10 an den Stäben 2 verspreizen bzw. in diese einschneiden. Die Hülsen 12 sind dann nicht erforderlich bzw. nur als Massenausgleich vorgesehen. Zumindest einer der Stäbe 2 könnte auch ein durchgehendes Gewinde oder Gewindeabschnitte aufweisen, sodaß die Elemente 4,5 bzw. die Gruppen mittels zweier Muttern axial festlegbar sind.

Zur Erhöhung der Torsionsfestigkeit der Nockenwelle zwischen den Nockenwellenelementen Aussteifungskörper in den zentralen Raum innerhalb der Stäbe 2 eingesetzt werden, die am Umfang Längsrillen aufweisen, und daher ähnlich wie die Beilagscheiben 10 die Stäbe teilweise umgreifen. Die Nockenwellenelemente weisen insbesondere mehrere einzelne Durchstecköffnungen 7 auf, die jeweils dem Querschnitt eines Stabes entsprechen, der nicht nur kreisförmig, sondern beispielsweise auch drei-, vier- oder sechseckig sein kann.

Liegen die Stäbe dicht aneinander, so ist in den Nockenwellenelementen 3,4,5 eine gemeinsame Durchstecköffnung gemäß Fig. 5 ausgebildet, die beispielsweise aus sechs ineinander übergehenden einzelnen Durchstecköffnungen 7 zusammengesetzt ist.

Sind die Stäbe 2 aneinander liegend vorgesehen, so sind weder einzelne Hülsen noch zentrale Verbindungsschrauben mit Beilagscheiben einsetzbar. In diesem Fall können statt dessen zwischen die Nockenelemente 3,4,5 Hülsen 12, Manschetten od. dgl. eingeschoben werden, die eine Bohrung 28 in der in Fig. 5 oder Fig. 7 gezeigten Form aufweisen. Derartige Hülsen oder Manschetten können auch mit einem Längsschlitz versehen sein und etwa nur drei Viertel der Stäbe 2 umschließen, wenn ein Massenausgleich auf diese Weise erzielt werden soll.

Eine Nockenwelle mit dicht aneinanderliegenden, gegebenenfalls untereinander verbundenen Stäben 2 weist bereits eine erhöhte Torsionsfestigkeit auf, diese kann nochmals erhöht werden, wenn der zentrale Raum durch einen weiteren Stab gefüllt wird, sodaß alle Stäbe 2 ein dicht aneinanderliegendes Bündel bilden. Der mittige Stab 2 weist bei einer Ausführung gemäß Fig. 5 mit sechs äußeren Stäben 2 denselben Durchmesser auf. Der Durchmesser des mittigen Stabes ist größer, wenn rundherum mehr als sechs, und kleiner, wenn weniger als sechs Stäbe vorgesehen sind.

Nockenwellenelemente 3,4,5 mit kreisrunden Öffnungen 7, 8 können beispielsweise fließgepreßt und dann bebohrt werden. Bevorzugt werden die Nockenelemente aber in einem Sinterverfahren hergestellt, was eine beliebige Formgebung der Durchstecköffnungen zuläßt, und weisen eine sehr hohe Formgenauigkeit auf. Da sie auch beim Zusammenbau mit den Stäben keinen temperatur- oder kräftebedingten Änderungen unterworfen sind, ist keinerlei Nachbearbeitung erforderlich. Es liegt somit ein Baukastensystem mit wenigen Bestandteilen vor, aus dem eine Mehrzahl von möglichen Nockenwellen zusammengefügt werden kann. Die Stäbe können aus jedem geeigneten Material, beispielsweise Stahl, Aluminium, insbesondere faserverstärkten Kunststoffen, usw. sein.

Die Nockenelemente 5 bzw. die Lagerelemente 4 mit angesetztem Nocken 6 sind jeweils um einen Winkel versetzt. Da bei einem Motor pro Nockenwellendrehung alle Zylinder geöffnet werden müssen, wenn sich während einer Drehung der Nockenwelle die Kurbelwelle des Motors zweimal dreht, ergibt sich für den Nockenversatz folgende Formen: 360° : Zylinderzahl = Versetzungswinkel der Nocken. Bei einem 6-Zylinder-Reihenmotor kann beispielsweise entsprechend dieser Formel eine 6-stäbige Nockenwelle verwendet werden, die um einen Winkel von 360° : 6 = 60° oder ein Vielfaches davon versetzte Nockenposition zuläßt. Hier ist dann nur ein einziger Nockentyp mit einer Aufnahmeöffnung gemäß Fig. 5 notwendig, um alle Nockenstellungen zu erzielen.

In der Ausführung nach Fig. 4 ist eine Gruppe von Nockenwellenelementen dargestellt, die aus zwei spiegelbildlich auf den Stäben 2 angeordneten Lagerelementen 4 mit je einem angeformten Nocken 6 bestehen, und nach einer der vorstehend beschriebenen Möglichkeiten miteinander verbunden sind. Die beiden Lagerelemente 4 werden von einem Wälzlager 14 umgeben, dessen Innenring gegebenenfalls auch durch die Lagerelemente 4 selbst gebildet sein kann, und dessen Außenring 15 bevorzugt mit tangential abstehenden Befestigungslaschen zur Fixierung am Motorblock versehen ist. Das Wälzlager 14 stellt daher gleichzeitig einen einteiligen Lagerblock dar, der beim Zusammensetzen der Nockenwelle an der gewünschten Stelle auf die Lagerelemente 4 aufgeschoben wird. Die herkömmliche Ölschmierung der Nockenwellenlager kann dadurch gegebenenfalls entfallen, woraus sich ein weiterer Kostenvorteil ergeben kann, wenn eine Ölzufuhr zu den Zylinderköpfen des Motors auch sonst nicht benötigt wird. Das Wälzlager 14 kann natürlich auch in den beiden Gruppendarstellungen der Fig. 1 eingesetzt werden, in dem es auf ein Lagerelement 4 vor dem Nockenelement 5 aufgeschoben wird. Für die Ausführung nach Fig. 4 wird hingegen ein in üblicher Weise zweiteiliger Lagerblock eingesetzt. Der einstückige Lagerblock 25 kann natürlich auch ohne Wälzlager ausgebildet sein, wie in Fig. 8 bis 11 gezeigt ist, sodaß eine übliche Gleitlagerung des Lagerelementes 4 gegeben ist.

In der Ausführung nach Fig. 6 und 7 sind, wie bereits erwähnt, die Lagerelemente 4 und die Hülsen 12 gleichartig ausgebildet, sodaß jede Hülse 12 auch als Lagerelement 4 eingesetzt werden kann. Die Größe der Öffnung 8 in den Lagerelementen 4 und Hülsen 12 entspricht dem Hüllkreis um die Stäbe 4, die jeweils spielfrei an der Öffnungswand anliegen. Die Hülsen 12 bzw. Lagerelemente 4 können dünnwandig sein und Flansche 27 aufweisen, die an den Nockenelementen 5 bzw. dem Antriebselement 3 anliegen.

In der Ausführung nach Fig. 8 bis 11 ist eine Nockenwelle 1 gezeigt, die eine variable, einzelne Steuerung jedes Ventils erlaubt. Die Nockenwellenelemente 3,4,5 sind in dieser Ausführung unverschiebbar auf drei unverschiebbaren als Trägerstäben dienenden Stäben 2 und auf drei verschiebbaren Stäben 17 angeordnet, die Schub- bzw. Zugstangen 17 bilden. Zusätzlich sind auf den Stäben 2,17 verschiebbare Nockenelemente 16 angeordnet, wobei jedes der drei verschiebbaren Nockenelemente 16 einem Nocken 6 eines Lagerelementes 4 zugeordnet ist, sodaß beide Nocken 6, 16 dasselbe Ventilstellglied **26** bedienen. Jeder Stab 17 ist mit einem Nockenelement 16 fest verbunden und durchsetzt verschiebbar Öffnungen 23 der unverschiebbaren Nockenwellenelemente 3,4,5. Den stirnseitig aus der Nockenwelle vorstehenden Enden der Stäbe 17 ist ein in Fig. 7 nur schematisch angedeuteter Stellantrieb 20 zugeordnet, der beispielsweise zwei gekoppelte druckmittelbetätigte Stellkolben pro Stab 17 aufweist.

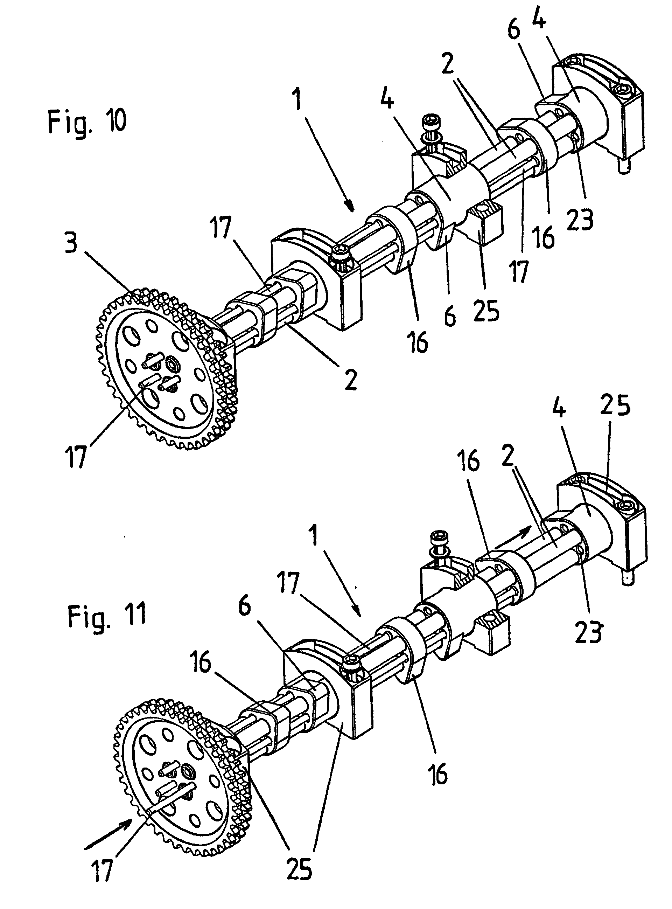

In den Schrägansichten der Fig. 10 und 11 sind der besseren Übersichtlichkeit halber Teile der Stäbe 2,17 abgeschnitten, und der Unterschied zwischen den beiden Darstellungen liegt im rechts gezeigten verschiebbaren Nockenelement 16, das in der Darstellung nach Fig. 8 an das äußerste Lagerelement 4, mit den gleichgerichteten Nocken 6 angenähert, und in Fig. 9 nach links verschoben ist. In Fig. 8 wirkt anstelle des Nockens 6 das verschobene größere Nockenelement 16 auf das Ventilstellglied, während in Fig. 9 der Nocken 6 das Ventilstellglied betätigt. Der verschiebbare Stab 17 ist vorzugsweise an der dem Nocken gegenüberliegenden Seite mit dem Nockenelement 16 verbunden.

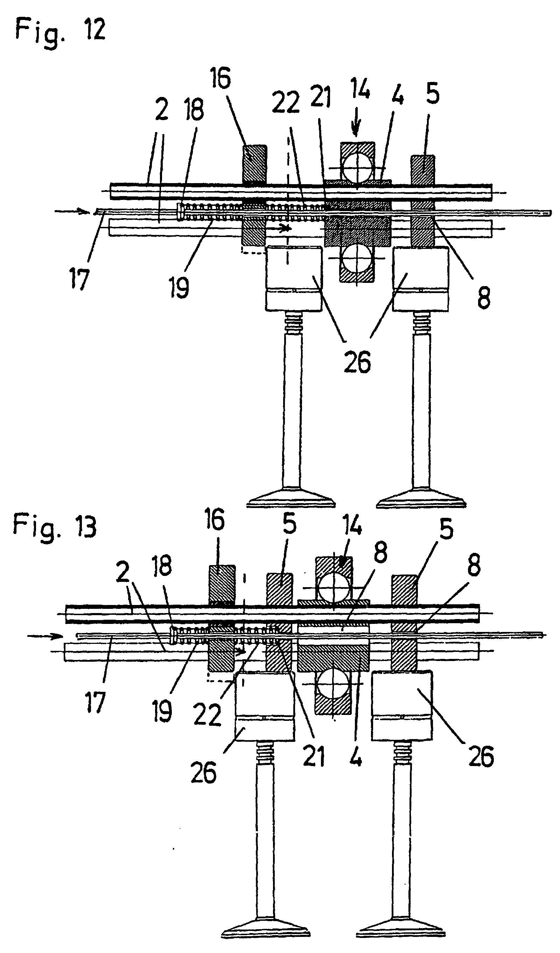

In der Ausführung nach Fig. 12 ist ein einziger verschiebbarer Stab 17 zentral vorgesehen, und von den nicht verschiebbaren Stäben 2 umgeben. Der Stab 17 trägt ein ringförmiges Widerlager 18, an den eine Feder 18 anliegt. Das verschiebbare Nockenelement 16 ist in der gezeigten Stellung außer Eingriff mit dem Ventilstellglied 26, d.h. das Ventil ist geschlossen und der Zylinder abgeschaltet.

Wird der Stab 17 nach rechts verschoben, so wird die Feder 19 komprimiert, sofeme das Nockenelement 16 die strichliert gezeichneten Lage einnimmt, in der der Nockenbereich seitlich am Ventilstellglied 26 anliegt. Sobald der Nockenbereich vom Ventilstellglied 26 weggedreht ist, verschiebt sich das Nockenelement 16 in eine Arbeitsposition oberhalb des Ventilstellgliedes 26, wofür nur geringe Stellkräfte erforderlich sind, und daher die Kraft der Feder 19 ausreicht, die ebenso wie die gleichartige Rückstellfeder 22 etwa halb komprimiert wird. Wird der Stab 17 wieder zurückverschoben, so kann sich die Rückstellfeder 22 entspannen, wenn das Ventil wieder in der Schließstellung ist, in der das Ventilstellglied 26 mit nur geringem Druck gegen den Grundkreisbereich drückt oder mit geringem Abstand zu diesem an einem nicht gezeigten Anschlag anliegt, und das verschiebbare Nockenelement 16 wird wieder in die in Fig. 12 gezeigte Ruhestellung überführt. Die Rückstellfeder 22 stützt sich am Lagerelement 4 ab.

Fig. 13 zeigt eine Ausführung, in der einem nicht verschiebbaren Nockenelement 5 ein verschiebbares Nockenelement 16 zugeordnet ist, das eine größere Nockenerhebung aufweist, wobei nach Verschiebung des Nockenelementes 16 in der zu Fig. 12 beschriebenen Weise die Öffnungszeit des Ventils verändert ist. Die Rückstellfeder 22 stützt sich in dieser Ausführung am Nockenelement 5 ab.

## Patentansprüche

1. Nockenwelle mit einem Trägerelement und mit drehfest angeordneten Antriebs- (3), Lager- (4) und Nockenelementen (5, 16), wobei das Trägerelement aus zumindest zwei zueinander parallelen Stäben (2, 17) gebildet ist, **dadurch gekennzeichnet, daß** auf dem Trägerelement die Antriebs- (3), Lager- (4) und Nockenelemente (5, 16) der Nockenwelle angeordnet sind.

2. Nockenwelle nach Anspruch 1, **dadurch gekennzeichnet, daß** drei, vier oder sechs Stäbe (2, 17) vorgesehen sind.

3. Nockenwelle nach Anspruch 1 oder 2, **dadurch gekennzeichnet, daß** die Stäbe (2, 17) mit Abstand zueinander angeordnet sind.

4. Nockenwelle nach einem der Ansprüche 1 bis 3, **dadurch gekennzeichnet, daß** zwischen den Nockenwellenelementen (3, 4, 5, 16) Hülsen (12) auf zumindest einem Stab (2, 17) vorgesehen sind

5. Nockenwelle nach einem der Ansprüche 1 bis 4, **dadurch gekennzeichnet, daß** Nockenwellenelemente (4,5) durch Verbindungselemente zu Funktionsgruppen verbunden sind.

6. Nockenwelle nach Anspruch 5, **dadurch gekennzeichnet, daß** die Nockenwellenelemente (4,5) jeder Funktionsgruppe mittels gekrümmter Spreizscheiben (10) an den Stäben (2, 17) axial festgeklemmt sind.

7. Nockenwelle nach einem der Ansprüche 1 bis 6, **dadurch gekennzeichnet, daß** auf jedes Lagerelement (4) ein einstückiger Lagerblock (14) aufgeschoben ist, der seitliche abstehende Montagelaschen aufweist.

8. Nockenwelle nach Anspruch 7, **dadurch gekennzeichnet, daß** der Lagerblock (14) ein Wälzlager enthält.

9. Nockenwelle nach einem der Ansprüche 1 bis 8, **dadurch gekennzeichnet, daß** zumindest ein Stab (17) in Längsrichtung der Nockenwelle (1) verschiebbar und zumindest ein Nockenelement (16) mit dem verschiebbaren Stab (17) gekoppelt ist.

10. Nockenwelle nach Anspruch 9, **dadurch gekennzeichnet, daß** alle verschiebbaren Nockenelemente (16) auf einem gemeinsamen, verschiebbaren Stab (17) angeordnet sind, und jedes Nockenelement (16) auf dem verschiebbaren Stab (17) um die Verschiebelänge des Stabes (17) zumindest in der Verschieberichtung federbeaufschlagt verschiebbar angeordnet ist.

11. Nockenwelle nach Anspruch 10, **dadurch gekennzeichnet, daß** auf dem verschiebbaren Stab (17) pro verschiebbaren Nockenelement (16) ein ringförmiges Widerlager (18) für eine Stellfeder (19) vorgesehen ist.

12. Nockenwelle nach Anspruch 10, **dadurch gekennzeichnet, daß** ein zweites Widerlager (21) für eine Rückstellfeder (22) an einem unverschiebbaren Nockenwellenelement (3,4,5) ausgebildet ist.

13. Nockenwelle nach Anspruch 9, **dadurch gekennzeichnet, daß** jedes verschiebbare Nockenelement (16) fest auf einem eigenen, verschiebbaren Stab (17) angeordnet ist.

14. Nockenwelle nach einem der Ansprüche 9 bis 13, **dadurch gekennzeichnet, daß** zumindest einem in Längsrichtung der Nockenwelle (1) unverschiebbaren Nockenelement (5) zumindest ein verschiebbares Nockenelement (16) mit einer größeren Umfangskontur zugeordnet ist.

15. Nockenwelle nach einem der Ansprüche 9 bis 14, **dadurch gekennzeichnet, daß** jedem verschiebbaren Stab (17) an zumindest einem Ende ein Stellglied (20) zugeordnet ist.

16. Nockenwelle nach einem der Ansprüche 9 bis 15, **dadurch gekennzeichnet, daß** jeder verschiebbare Stab (17) einen kleineren Durchmesser als jeder nicht verschiebbare, als Trägerstab der Nockenwellenelemente (3,4,5,16) dienende Stab (2) aufweist.

## Claims

1. A camshaft comprising a carrier element and non-rotatably arranged drive (3), bearing (4) and cam (5, 16) elements, wherein the carrier element is formed from at least two mutually parallel bars (2, 17), **characterised in that** the drive (3), bearing (4) and cam (5, 16) elements of the camshaft are arranged on the carrier element.

2. A camshaft according to claim 1 **characterised in that** there are provided three, four or six bars (2, 17).

3. A camshaft according to claim I or claim 2 **characterised in that** the bars (2, 17) are arranged at a spacing relative to each other.

4. A camshaft according to one of claims 1 to 3 **characterised in that** sleeves (12) are provided between the camshaft elements (3, 4, 5, 16) on at least one bar (2, 17).

5. A camshaft according to one of claims 1 to 4 **characterised in that** camshaft elements (4, 5) are connected by connecting elements to form functional groups.

6. A camshaft according to claim 5 **characterised in that** the camshaft elements (4, 5) of each functional group are axially clamped fast to the bars (2, 17) by means of curved spreader discs (10).

7. A camshaft according to one of claims 1 to 6 **characterised in that** pushed on to each bearing element (4) is a one-piece bearing block (14) which has lateral projecting mounting plates.

8. A camshaft according to claim 7 **characterised in that** the bearing block (14) includes a rolling bearing.

9. A camshaft according to one of claims 1 to 8 **characterised in that** at least one bar (17) is displaceable in the longitudinal direction of the camshaft (1) and at least one cam element (16) is coupled to the displaceable bar (17).

10. A camshaft according to claim 9 **characterised in that** all displaceable cam elements (16) are arranged on a common displaceable bar (17) and each cam element (16) is arranged on the displaceable bar (17) at least displaceably under a spring force by the displacement length of the bar (17) in the displacement direction.

11. A camshaft according to claim 10 **characterised in that** provided on the displaceable bar (17) for each displaceable cam element (16) is an annular support (18) for an adjusting spring (19).

12. A camshaft according to claim 10 **characterised in that** a second support (21) for a return spring (22) is provided on a non-displaceable camshaft element (3, 4, 5).

13. A camshaft according to claim 9 **characterised in that** each displaceable cam element (16) is arranged fixedly on its own displaceable bar (17).

14. A camshaft according to one of claims 9 to 13 **characterised in that** associated with at least one cam element (5) which is non-displaceable in the longitudinal direction of the camshaft (1) is at least one displaceable cam element (16) with a larger peripheral contour.

15. A camshaft according to one of claims 9 to 14 **characterised in that** an adjusting member (20) is associated with each displaceable bar (17) at at least one end.

16. A camshaft according to one of claims 9 to 15 **characterised in that** each displaceable bar (17) is of a smaller diameter than each non-displaceable bar (2) serving as a carrier bar for the camshaft elements (3, 4, 5, 16).

## Revendications

1. Arbre à cames avec un élément porteur et avec des éléments d'entraînement (3), de palier (4) et de cames (5, 16), l'élément porteur étant formé d'au moins deux barres parallèles entre elles (2, 17), **caractérisé en ce que** les éléments d'entraînement (3), de palier (4) et de cames (5, 16) sont disposés sur l'élément porteur de l'arbre à cames.

2. Arbre à cames selon la revendication 1, **caractérisé en ce que** trois, quatre ou six barres (2, 17) sont prévues.

3. Arbre à cames selon la revendication 1 ou 2, **caractérisé en ce que** les barres (2, 17) sont disposées avec un écart entre elles.

4. Arbre à cames selon l'une des revendications 1 à 3, **caractérisé en ce que** des douilles (12) sont prévues sur au moins une barre (2, 17) entre les éléments d'arbre à cames (3, 4, 5, 16).

5. Arbre à cames selon l'une des revendications 1 à 4, **caractérisé en ce que** les éléments d'arbre à cames (4, 5) sont reliés par des éléments de liaison pour former des groupes fonctionnels.

6. Arbre à cames selon la revendication 5, **caractérisé en ce que** les éléments d'arbre à cames (4, 5) de chaque groupe fonctionnel sont coincés dans le sens axial sur les barres (2, 17) au moyen de rondelles d'écartement incurvées (10).

7. Arbre à cames selon l'une des revendications 1 à 6, **caractérisé en ce qu'**un bloc palier d'un seul tenant (14), qui présente des pattes de montage latérales s'étendant vers l'extérieur, est enfoncé sur chaque élément de palier (4).

8. Arbre à cames selon la revendication 7, **caractérisé en ce que** le bloc palier (14) contient un palier à roulements.

9. Arbre à cames selon l'une des revendications 1 à 8, **caractérisé en ce qu'**au moins une barre (17) est mobile dans la direction longitudinale de l'arbre à cames (1) et au moins un élément de came (16) est accouplé avec la barre mobile (17).

10. Arbre à cames selon la revendication 9, **caractérisé en ce que** tous les éléments de came mobiles (16) sont disposés sur une barre commune mobile (17) et chaque élément de came (16) est disposé sur la barre mobile (17) de manière à pouvoir se déplacer, par la force d'un ressort, de la longueur de déplacement de la barre (17) au moins dans la direction de déplacement.

11. Arbre à cames selon la revendication 10, **caractérisé en ce qu'**il est prévu sur la barre mobile (17), par élément de came mobile (16), un palier de butée (18) de forme annulaire pour un ressort de réglage (19)

12. Arbre à cames selon la revendication 10, **caractérisé en ce qu'**un deuxième palier de butée (21) pour un ressort de rappel (22) est formé sur un élément d'arbre à cames fixe (3, 4, 5).

13. Arbre à cames selon la revendication 9, **caractérisé en ce que** chaque élément de came mobile (16) est disposé de manière fixe sur une barre mobile propre (17).

14. Arbre à cames selon l'une des revendications 9 à 13, **caractérisé en ce qu'**au moins un élément de came mobile (16) avec un contour périphérique supérieur est associé à au moins un élément de came fixe (5) dans la direction longitudinale de l'arbre à cames (1).

15. Arbre à cames selon l'une des revendications 9 à 14, **caractérisé en ce qu'**un élément de réglage (20) est associé à chaque barre mobile (17), à au moins une extrémité.

16. Arbre à cames selon l'une des revendications 9 à 15, **caractérisé en ce que** chaque barre mobile (17) présente un diamètre inférieur à celui de chaque barre non mobile (2), servant de barre porteuse des éléments d'arbre à cames (3, 4, 5, 16).
